# EUROPEAN PATENT APPLICATION

(11) **EP 2 372 526 A2**
(43) Date of publication of application: **05.10.2011**
(21) Application number: 11160766.9
(22) Date of filing: 01.04.2011
(51) Int. Cl.: G06F 3/12

(54) **Data dividing method and data dividing device**

(30) Priority: 01.04.2010 JP 2010085451
(71) Applicant: Seiko Instruments Inc., Chiba-shi, Chiba (JP)
(72) Inventor: Tanaka, Maiko, Chiba-shi Chiba (JP)
(74) Representative: Cloughley, Peter Andrew

(57) **Abstract**

The data dividing method includes: a printer state detecting step of detecting a state of the printer device; a division data amount setting step of setting, when a first division data item is to be transferred to the printer device, a size of a print range included in a second division data item to be subsequently transferred to the printer device based on the state of the printer device detected in the printer state detecting step; and a data dividing step of dividing the print range of data to be printed into the second division data items based on the size of the print range set in the division data amount setting step.

## Description

The present invention relates to a data dividing method and a data dividing device for dividing data into optimal amounts according to a transfer speed of the data.

For example, in a printing system including a host device such as a personal computer and a printer device, data items to be printed by the printer device are sequentially transferred by the host device. At this time, the host device divides data on one print image into a plurality of ranges by a method called "banding", and transfers the divided data on the print image (hereinafter, referred to as "print data") as print data to be printed by the printer device.

Up to now, as disclosed in, for example, Japanese Patent Application Laid-open No. 2000-276317, when data on one print image is divided by a banding method, the data is divided into predetermined widths called "banding widths". Further, a print command necessary to print each of the print data items obtained by the division is added to the print data item. The printer device performs a processing for printing the print data according to the print command included in the print data.

Here, in general, the banding width is often set to a fixed width in advance for each interface through which the host device transfers the data items to be printed by the printer device.

For such a printing system, it is desired that a print speed, that is, a print time that has elapsed since the print command was output from the host device until the printer device completes printing of the print data, be improved. The print speed of the printing system is determined based on: a data transfer speed of the print data transferred from the host device to the printer device; a processing speed of processing means, such as a central processing unit (CPU), for performing a command processing according to the print command on the printer device; and the print speed at which an actual printing operation is performed on the printer device.

For example, in the printing system using a communication interface having a low transfer speed between the host device and the printer device, it takes a long time for the print data to transfer from the host device to the printer device. Therefore, an idle time for a print processing such as the command processing or the printing operation on the printer device becomes longer. In such a case, for example, an operating ratio of the processing means of the printer device is low, and the print speed of the printing system cannot be improved. Against this backdrop, it is conceivable to increase the data transfer speed of the print data. However, the data transfer speed of the print data greatly depends upon the communication interface employed in the printing system, and if the communication interface is changed, there is a problem of, for example, causing expenses for replacing the printing system that has already been introduced.

However, an improvement of the print speed of the printing system may be expected by improving the operating ratio of the processing means of the printer device and improving the speed of the print processing on the printer device. As described above, a print processing speed of the printer device is determined based on a processing load imposed on the processing means when the transferred print data is processed and a time required for the actual printing operation. The time required for the actual printing operation on the printer device greatly depends upon the structure of the printer device, but the processing load of the command processing imposed on the processing means of the printer device changes according to the number of print commands included in the transferred print data, and the processing load of the command processing increases as the number of print commands to be processed becomes larger. For this reason, by reducing the processing load of the command processing, it is possible to improve the speed of the overall print processing including the actual printing operation performed on the printer device.

Note that a total number of print commands required for printing one print image changes according to the banding width, and the print command in a case where the banding width is larger (data amount of the print data is larger) is a command for the print data having a larger amount, which decreases the total number of print commands for the one print image on the whole. Accordingly, if the banding width (data amount of the print data) transferred from the host device to the printer device is set to an optimal width (data amount) against the processing load of the command processing performed on the printer device, the print processing speed of the printer device can be improved.

From the above-mentioned perspective, it is effective to strike a balance between the data transfer speed of the print data and the print processing speed of the printer device instead of improving only one of the data transfer speed of the print data and the print processing speed of the printer device in order to efficiently improve the print speed of the printing system.

In addition, as a method of striking a balance between the data transfer speed of the print data and the print processing speed of the printer device, it is effective to set the banding width (data amount of the print data) used for dividing the data on the print image to the optimal width (data amount) in order to efficiently improve the print speed of the printing system. This method is also an effective method for the printing system that has already been introduced.

However, conventional printing systems, in which print data items having a fixed banding width are transferred between the host device and the printer device, cause a problem that the banding width (data amount of the print data) cannot be set to the optimal width (data amount) in order to improve the print processing speed of the printer device.

The present invention has been made in view of the above-mentioned problem, and an object thereof is to provide a data dividing method and a data dividing device which are capable of optimizing, when a host device divides data on one print image into a plurality of data items and transfers the divided data items to a printer device, a banding width of the divided print data in a printing system including the host device and the printer device.

In order to solve the above-mentioned problems, the present invention provides a data dividing method, which is performed by a host device for dividing a print range of data to be printed into a plurality of division data items and transferring the plurality of division data items sequentially to a printer device in a printer system, the printer device and the host device being connected to each other by communication means in the printer system, the data dividing method including: a printer state detecting step of detecting a state of the printer device; a division data amount setting step of setting, when a first division data item is to be transferred to the printer device, a size of the print range included in a second division data item to be subsequently transferred to the printer device based on the state of the printer device detected in the printer state detecting step; and a data dividing step of dividing the print range of the data to be printed into the second division data items based on the size of the print range set in the division data amount setting step.

Further, according to the present invention, the printer state detecting step preferably includes detecting the state of the printer device based on an operating signal for indicating whether or not the printer device is operating.

Further, according to the present invention, preferably the division data amount setting step includes: setting the size of the print range included in the second division data item to a print range smaller than the size of the print range included in the first division data item in a case where the state of the printer device detected in the printer state detecting step is a state in which the printer device is operating; and setting the size of the print range included in the second division data item to a print range larger than the size of the print range included in the first division data item in a case where the state of the printer device detected in the printer state detecting step is a state in which the printer device is not operating.

Further, according to the present invention, preferably: the printer state detecting step further includes detecting, when the first division data item is to be transferred to the printer device, a time that has elapsed since the first division data item was intended to be transferred to the printer device until the operating signal indicates that the printer device is not operating; the division data amount setting step further includes a division data amount changing step of changing a change amount for changing the size of the print range included in the second division data item based on the time that has elapsed until the operating signal indicates that the printer device is not operating which is detected in the printer state detecting step; and the division data amount changing step includes: setting the change amount of the size of the print range included in the second division data item to a larger change amount in a case where the time that has elapsed until the operating signal indicates that the printer device is not operating is longer than a predetermined first time; and setting the change amount of the size of the print range included in the second division data item to a smaller change amount in a case where the time that has elapsed until the operating signal indicates that the printer device is not operating is shorter than a predetermined second time.

Further, according to the present invention, preferably the division data amount setting step further includes: storing, each time the first division data item and the second division data item are transferred to the printer device: range decreasing information indicating that the size of the print range included in the first division data item and the second division data item is set to a print range smaller than the size of the print range included in the first division data item and the second division data item; and range increasing information indicating that the size of the print range included in the first division data item and the second division data item is set to a print range larger than the size of the print range included in the first division data item and the second division data item; and setting, in a case where one of the range increasing information and the range decreasing information has been stored a predetermined times when the second division data item is to be transferred to the printer device, the size of the print range included in a third division data item to be subsequently transferred to the printer device based on the stored one of the range increasing information and the range decreasing information.

Further, according to the present invention, preferably the division data amount setting step further includes setting, in a case where the one of the range increasing information and the range decreasing information has been stored two times in a row, the size of the print range included in the third division data item based on the one of the range increasing information and the range decreasing information that has been stored two times in a row.

Further, according to the present invention, preferably the data dividing method further includes setting in advance a plurality of first setting values for indicating the size of the print range corresponding to the communication means connecting the printer device and the host device to each other and one of a second setting value and a rate for changing the size of the print range, in which the division data amount setting step includes: setting one of the plurality of first setting values corresponding to the communication means connecting the printer device and the host device to each other among the plurality of first setting values as the size of the print range included in the first division data item; and setting the size of the print range included in one of the second division data item and the third division data item based on one of the second setting value and the rate.

Further, according to the present invention, preferably: the data to be printed includes image data; and the print range includes a banding width of the image data.

Further, the present invention provides a data dividing device, which is provided to a host device for dividing a print range of data to be printed into a plurality of division data items and transferring the plurality of division data items sequentially to a printer device in a printer system, the printer device and the host device being connected to each other by communication means in the printer system, the data dividing device including: printer state detecting means for detecting a state of the printer device; division data amount setting means for setting, when a first division data item is to be transferred to the printer device, a size of the print range included in a second division data item to be subsequently transferred to the printer device based on the state of the printer device detected by the printer state detecting means; and data dividing means for dividing the print range of the data to be printed into the second division data items based on the size of the print range set by the division data amount setting means.

According to the present invention, in the printing system including the host device and the printer device, there is provided an effect of optimizing the banding width of the divided print data when the host device divides data on one print image into a plurality of data items and transfers the divided data items to the printer device.

Embodiments of the present invention will now be described by way of further example only and with reference to the accompanying drawings, in which:
FIG. 1 is a block diagram illustrating a schematic configuration of components related to print processing in a printing system according to an embodiment of the present invention;
FIG. 2 is a flowchart illustrating a first processing procedure for changing a banding width in the printing system according to the embodiment of the present invention;
FIG. 3 is a flowchart illustrating a second processing procedure for changing the banding width in the printing system according to the embodiment of the present invention;
FIGS. 4A and 4B are diagrams illustrating an example of a comparison between a print time for a conventional printing system and a print time for the printing system according to the embodiment of the present invention; and
FIGS. 5A and 5B are diagrams illustrating another example of the comparison between the print time for the conventional printing system and the print time for the printing system according to the embodiment of the present invention.

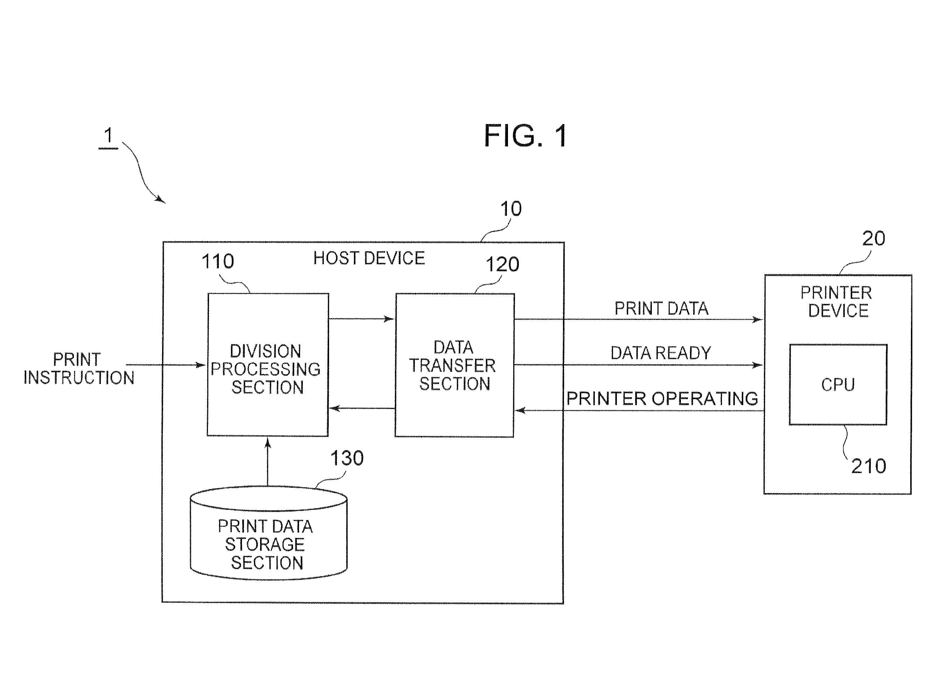

Hereinafter, an embodiment of the present invention is described with reference to the accompanying drawings. FIG. 1 is a block diagram illustrating a schematic configuration of components related to print processing in a printing system according to this embodiment. In FIG. 1, a printing system 1 includes a host device 10 and a printer device 20. In the printing system 1, the host device 10 and the printer device 20 are connected to each other through a communication interface. Further, the host device 10 includes a division processing section 110, a data transfer section 120, and a print data storage section 130. Further, the printer device 20 includes a CPU 210.

Responding to a print instruction input from control means (not shown), the host device 10 generates one print image based on print data stored in the print data storage section 130 which has been specified by the control means (not shown). Then, the generated print image is divided into a plurality of ranges by a banding method, and print data items obtained by the division are sequentially transferred to the printer device 20 through the communication interface.

The print data storage section 130 is storage means for storing the print data to be printed in the printing system 1 according to this embodiment, such as a hard disk drive (HDD), a flash memory, or a random access memory (RAM). The print data stored in the print data storage section 130 is read by the division processing section 110 responding to the print instruction input from the control means.

In response to the print instruction input from the control means, the division processing section 110 reads the specified print data from the print data storage section 130. Then, the division processing section 110 generates data on the print image to be printed by the printer device 20 from the print data read from the print data storage section 130. In order to transfer the generated data on the print image to the printer device 20 in a divided state, the division processing section 110 divides the data into a plurality of print data items each having a range of a predetermined banding width. The print data items obtained by the division are sequentially output to the data transfer section 120 each time a request signal for the print data is input from the data transfer section 120.

Further, the division processing section 110 changes the banding width used for dividing the data on the print image responding to a below-mentioned banding width change instruction input from the data transfer section 120, and redivides the data on the print image within the range that has not been output to the data transfer section 120 into print data items having the changed banding width. Then, as the print data to be output to the data transfer section 120, the print data items having the changed banding width which have been obtained by the redivision are sequentially output to the data transfer section 120 each time a subsequent request signal for the print data is input from the data transfer section 120.

The data transfer section 120 adds a print command necessary for the printing to the print data item input from the division processing section 110, and transfers the print data item having the print command added thereto to the printer device 20 through the communication interface. When transferring the print data item having the print command added thereto to the printer device 20, the data transfer section 120 judges whether or not the print data item having the print command added thereto can be transmitted to the printer device 20 based on a data ready signal and a printer operating signal that are communicated therebetween through the communication interface. Further, after the print data item having the print command added thereto has been transferred to the printer device 20, the data transfer section 120 outputs the request signal for requesting the print data item to be transferred next time (hereinafter, referred to as "print data request signal") to the division processing section 110.

More specifically, first, after adding the print command to the print data item input from the division processing section 110, the data transfer section 120 uses the data ready signal to notify the printer device 20 that the print data item having the print command added thereto is ready to be transferred. After that, the data transfer section 120 confirms that the printer operating signal for indicating a state of a print processing including processings such as a command processing and a printing operation that are performed on the printer device 20 does not indicate the print processing being under way, and transfers the print data item having the print command added thereto to the printer device 20. Further, in order to acquire the print data item to be transferred next time, the data transfer section 120 outputs the print data request signal to the division processing section 110.

Note that after the data transfer section 120 uses the data ready signal to notify the printer device 20 that the print data item having the print command added thereto is ready to be transferred, if the printer operating signal input from the printer device 20 indicates the print processing being under way, the transfer of the print data item having the print command added thereto to the printer device 20 is suspended until it is confirmed that the print processing is not under way on the printer device 20. Then, after it is confirmed that the print processing is not under way on the printer device 20, the data transfer section 120 repeatedly performs the transfer of the print data item having the print command added thereto to the printer device 20 and the output of the print data request signal to the division processing section 110 in the same manner as described above, and transfers all the print data items to the printer device 20.

Here, the following method is conceivable as an example of a method of allowing the data transfer section 120 to judge whether or not the print data item having the print command added thereto can be transferred to the printer device 20 based on the data ready signal and the printer operating signal. In one method, during a period in which the print data item having the print command added thereto is ready to be transferred, the data transfer section 120 keeps outputting the data ready signal to the printer device 20 and monitors the printer operating signal input from the printer device 20. This method allows the data transfer section 120 to judge that the print data item having the print command added thereto can be transferred to the printer device 20 when it is confirmed based on the printer operating signal being monitored that the print processing has been completed on the printer device 20.

In another method, the data transfer section 120 outputs the data ready signal to the printer device 20 after the print data item having the print command added thereto is ready to be transferred, and checks the state of the print processing performed on the printer device 20 based on the printer operating signal input from the printer device 20 in response to the data ready signal. At this time, the data transfer section 120 temporarily terminates the notification using the data ready signal when the printer operating signal is input from the printer device 20 in response to the data ready signal. Then, after a predetermined time has elapsed, the notification using the data ready signal is again performed. The notification using the data ready signal, the check of the state of the print processing performed on the printer device 20 based on the printer operating signal, and the termination of the notification using the data ready signal are repeatedly performed. This method allows the data transfer section 120 to judge that the print data item having the print command added thereto can be transferred to the printer device 20 when it is confirmed that the print processing is not under way on the printer device 20 based on the printer operating signal input from the printer device 20 in response to the data ready signal.

Note that the method of checking the state of the print processing performed on the printer device 20 by using the printer operating signal input from the printer device 20 is changed over depending on an output method for the printer operating signal to be output from the CPU 210 within the printer device 20.

Further, according to the state of the print processing performed on the printer device 20, the data transfer section 120 outputs the banding width change instruction for changing the banding width of the print data item to the division processing section 110. Note that description is made later with regard to instruction contents of the banding width change instruction output to the division processing section 110 by the data transfer section 120.

In the above-mentioned manner, the host device 10 causes the data transfer section 120 to perform the transfer of the print data item having the print command added thereto to the printer device 20 and the check of the state of the print processing performed on the printer device 20 in parallel. Then, the data transfer section 120 instructs the division processing section 110 to change the banding width of the print data item to be transferred to the printer device 20 based on the confirmed state of the print processing performed on the printer device 20. This causes the division processing section 110 to change the banding width of the data on the print image within the range that has not been transferred to the printer device 20. As a result, the host device 10 can transfer the print data having an optimal banding width to the printer device 20.

The printer device 20 causes printing means (not shown) to print the print data item having the print command added thereto which has been transferred from the host device 10 through the communication interface according to the print command added to the print data item.

According to the print command added to the print data item transferred from the host device 10, for example, the CPU 210 converts a print data portion within the print data item having the print command added thereto into data having a format that allows the printing by the printing means, and outputs the data obtained by the conversion to the printing means. Further, the CPU 210 keeps track of the states of, for example, a data conversion processing for the print data performed by itself (CPU 210), the command processing corresponding to a print command portion within the print data having the print command added thereto, and the print processing performed by the printing means. Then, the CPU 210 notifies the host device 10 of the state of the print processing within the printer device 20, which is kept track of by the CPU 210, as the printer operating signal through the communication interface.

Note that conceivable methods for outputting the printer operating signal output from the CPU 210 in order to notify the host device 10 of the state of the print processing performed on the printer device 20 include a method of constantly outputting a signal for indicating the state of the print processing performed on the printer device 20 and a method of outputting the signal for indicating the state of the print processing performed on the printer device 20 each time the data ready signal indicating that the print data item having the print command added thereto is ready to be transferred from the host device 10 is input.

Note that the output method for the printer operating signal to be output from the CPU 210 is changed over according to a check method in which the data transfer section 120 within the host device 10 checks the state of the print processing performed on the printer device 20.

### (First processing procedure)

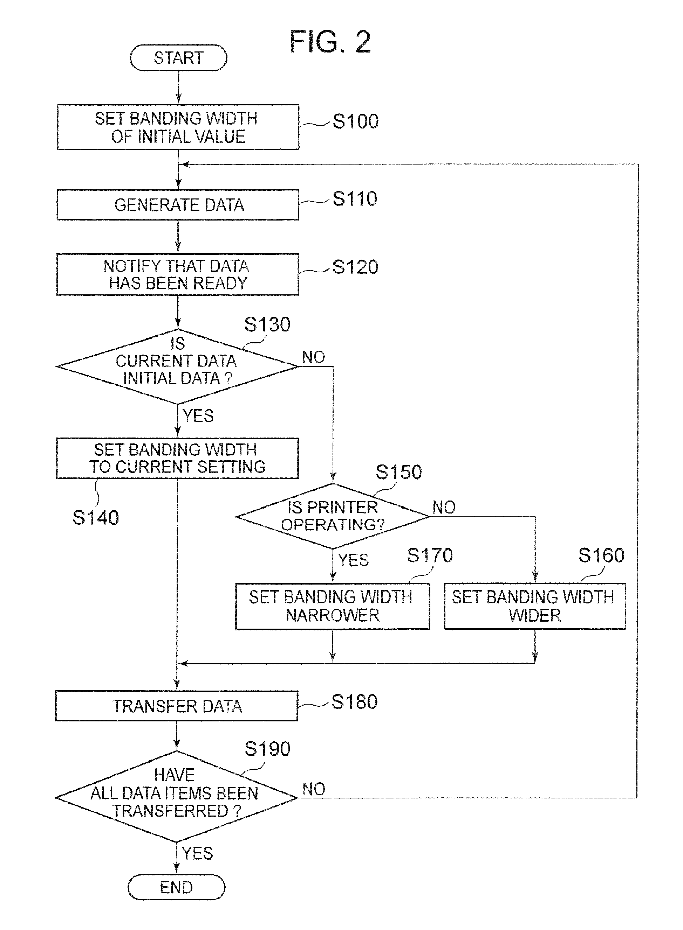

Next described is a method of changing the banding width in the printing system 1 according to this embodiment. FIG. 2 is a flowchart illustrating a first processing procedure for changing the banding width in the printing system 1 according to this embodiment. The first processing procedure is followed in a case of transferring the print data having the optimal banding width corresponding to the state of the print processing performed on the printer device 20 to the printer device 20 by successively changing the banding width of the print data item. Note that in the first processing procedure, the banding width of the print data item to be transferred to the printer device 20 for the second and subsequent times is changed to the optimal banding width.

First, in response to the print instruction input from the control means with the print data specified thereby, the division processing section 110 reads the print data specified by the control means from the print data storage section 130, and generates one print image based on the read print data. Then, in Step S100, the division processing section 110 sets the banding width having a predetermined initial value. Note that the banding width having the initial value is a value of the banding width determined in advance based on a transfer speed of the communication interface connecting the host device 10 and the printer device 20.

Note that if there are a plurality of communication interfaces for connecting the host device 10 and the printer device 20, the predetermined banding width may be set as the initial value irrespective of the transfer speed of the communication interface. Alternatively, the banding width having an initial value corresponding to the transfer speed of each of the communication interfaces may be preset for each of the communication interfaces to thereby set the banding width having the initial value corresponding to the transfer speed of a currently-used communication interface. Instead of the communication interface connecting the host device 10 and the printer device 20, it is also possible to preset the banding width having an initial value corresponding to each kind of printing quality to be used by the printer device 20 for the printing, for example, for each kind of printing quality such as a printing resolution, to thereby set the banding width having the initial value corresponding to the kind of printing quality currently used for the printing.

Subsequently, in Step S110, the division processing section 110 divides the generated print image by the banding method based on the set banding width having the initial value, and generates the print data having the banding width of the initial value. Then, the generated print data having the banding width of the initial value is output to the data transfer section 120.

Subsequently, in Step S120, the data transfer section 120 adds the print command necessary for the printing to the print data having the banding width of the initial value input from the division processing section 110, and outputs the data ready signal, which indicates that the print data item having the print command added thereto is ready to be transferred [notify that data has been ready], to the printer device 20 through the communication interface.

Subsequently, in Step S130, the data transfer section 120 checks whether or not the print data item having the print command added thereto to be currently transferred to the printer device 20 is an initial print data item corresponding to the print instruction input from the control means. If the print data item to be currently transferred to the printer device 20 is the initial print data item, the procedure advances to Step S140, in which the banding width change instruction indicating that the banding width of the print data item to be transferred next time to the printer device 20 has the setting kept from being changed (determined to the current setting) is output to the division processing section 110. Note that in Step S140, because the setting of the banding width is not changed, the banding width change instruction may be configured not to be output.

Then, the procedure advances to Step S180, in which the print data item having the print command added thereto to be currently transferred is transferred to the printer device 20. Note that the transfer of the print data item having the print command added thereto to the printer device 20 is performed after it is confirmed that the printer operating signal for indicating the state of the print processing performed on the printer device 20 indicates that the print processing is not under way.

On the other hand, in Step S130, if the print data item to be currently transferred to the printer device 20 is not the initial print data item, the procedure advances to Step S150, in which it is checked whether or not the printer operating signal input from the printer device 20 indicates that the print processing is under way (the printer device 20 is in a operating state). If the printer operating signal input from the printer device 20 indicates the print processing not (or no longer) being under way (the printer device 20 is not in an operating state), it is judged that the transfer speed of the communication interface is fast. Then, the procedure advances to Step S160, in which the banding width change instruction indicating that the banding width of the print data item to be transferred next time to the printer device 20 is to be set wider is output to the division processing section 110.

On the other hand, in Step S150, if the printer operating signal input from the printer device 20 indicates the print processing (still) being under way (the printer device 20 is in an operating state), it is judged that the transfer speed of the communication interface is slow. Then, the procedure advances to Step S170, in which the banding width change instruction indicating that the banding width of the print data item to be transferred next time to the printer device 20 is to be set narrower is output to the division processing section 110.

Then, the procedure advances to Step S180, in which the print data item having the print command added thereto to be currently transferred is transferred to the printer device 20. Note that the transfer of the print data item having the print command added thereto to the printer device 20 is performed after it is confirmed that the printer operating signal for indicating the state of the print processing performed on the printer device 20 indicates that the print processing is not (or is no longer) under way.

Subsequently, in Step S190, the data transfer section 120 checks whether or not the print data item having the print command added thereto that has been currently transferred has completed the transfer of all the print data items generated from the print image based on the print data specified by the control means to the printer device 20. If the transfer of all the print data items to the printer device 20 has been completed, the processing is brought to completion.

On the other hand, in Step S190, if the transfer of all the print data items to the printer device 20 has not been completed, the data transfer section 120 outputs the print data request signal to the division processing section 110, and requests the print data item to be transferred next time. Then, the procedure returns to Step S110, in which the division processing section 110 generates the print data having the banding width corresponding to the banding width change instruction output from the data transfer section 120 in Step S140, Step S160, or Step S170. Then, the print data having the banding width corresponding to the generated banding width change instruction is output to the data transfer section 120.

Note that to perform a change of the banding width according to the banding width change instruction input from the data transfer section 120, the division processing section 110 can change the banding width of the print data item to be transferred next time to the printer device 20 by, for example, adding or subtracting a value of a predetermined fixed width. Further, the banding width of the print data item to be transferred next time to the printer device 20 can also be changed by, for example, adding or subtracting a value of a width based on a predetermined rate. Further, the banding width of the print data item to be transferred next time to the printer device 20 can be changed by, for example, multiplying the value of the current banding width by a predetermined rate corresponding to each of cases of setting the banding width wider and setting the banding width narrower.

In addition, for example, the value of the width to be added to or subtracted from the currently-set banding width and the rate to be used can be made variable according to a length of the printer operating signal input from the printer device 20 or a history of the length of the printer operating signal. It is conceivable to judge the length of the printer operating signal used in this case by the following method. For example, in a case where the data transfer section 120 monitors the printer operating signal input from the printer device 20, a time during which the input printer operating signal indicates the print processing being under way can be set as the length of the printer operating signal. Alternatively, for example, in a case where the data transfer section 120 checks the state of the print processing performed on the printer device 20 based on the printer operating signal input in response to the data ready signal from the printer device 20, a time obtained by multiplying an interval at which the data ready signal is output by the number of times that the printer operating signal is checked can be set as the length of the printer operating signal. Further, the banding width may have the setting kept from being changed (may keep the current setting) if the length of the printer operating signal is within a preset range, while the banding width may be set wider or narrower if the length of the printer operating signal is out of the preset range.

Thus, the generation of the print data based on the banding method and the transfer of the print data item having the print command added thereto to the printer device 20 are repeatedly performed by the division processing section 110 and the data transfer section 120, respectively.

As described above, in the first processing procedure followed by the printing system 1 according to this embodiment, the banding width of the print data item to be transferred next time to the printer device 20 can be changed according to the state of the print processing performed on the printer device 20 when the print data is transferred to the printer device 20 for the second and subsequent times. If the print processing is not under way on the printer device 20, the banding width of the print data item to be transferred next time to the printer device 20 is set wider than the banding width of the print data item transferred last time to the printer device 20. This can alleviate a processing load of the print processing performed by the CPU 210 within the printer device 20 according to the print command added to the print data, thereby improving a print speed of the printing system 1.

On the other hand, if the print processing is under way on the printer device 20, the banding width of the print data item to be transferred next time to the printer device 20 is set narrower than the banding width of the print data item transferred last time to the printer device 20. This reduces the amount of the print data to be transferred to the printer device 20, and can increase an operating ratio of the CPU 210 within the printer device 20 by reducing a transfer waiting time for the print data, thereby improving the print speed of the printing system 1.

### (Second processing procedure)

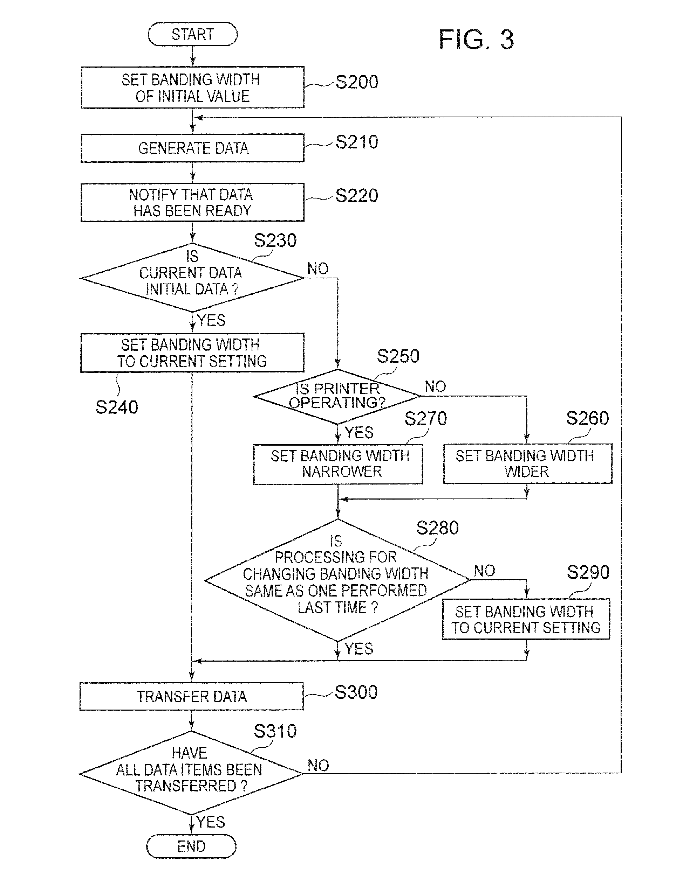

Next described is another method of changing the banding width in the printing system 1 according to this embodiment. FIG. 3 is a flowchart illustrating a second processing procedure for changing the banding width in the printing system 1 according to this embodiment. The second processing procedure is followed in a case of transferring the print data having the optimal banding width corresponding to the state of the print processing performed on the printer device 20 to the printer device 20 by judging whether or not to change the banding width of the print data item. Note that in the second processing procedure, the banding width of the print data item to be transferred to the printer device 20 for the second and subsequent times is changed to the optimal banding width.

First, in response to the print instruction input from the control means with the print data specified thereby, the division processing section 110 reads the print data specified by the control means from the print data storage section 130, and generates one print image based on the read print data. Then, in Step S200, the division processing section 110 sets the banding width having a predetermined initial value. Note that the banding width having the initial value is the same as the banding width having the initial value set in Step S100 of the first processing procedure illustrated in FIG. 2.

Subsequently, in Step S210, the division processing section 110 divides the generated print image by the banding method based on the set banding width having the initial value, and generates the print data having the banding width of the initial value. Then, the generated print data having the banding width of the initial value is output to the data transfer section 120.

Subsequently, in Step S220, the data transfer section 120 adds the print command necessary for the printing to the print data having the banding width of the initial value input from the division processing section 110, and outputs the data ready signal, which indicates that the print data item having the print command added thereto is ready to be transferred, to the printer device 20 through the communication interface.

Subsequently, in Step S230, the data transfer section 120 checks whether or not the print data item having the print command added thereto to be currently transferred to the printer device 20 is an initial print data item corresponding to the print instruction input from the control means. If the print data item to be currently transferred to the printer device 20 is the initial print data item, the procedure advances to Step S240, in which information on the banding width change instruction indicating that the banding width of the print data item to be transferred next time to the printer device 20 has the setting kept from being changed (determined to the current setting) is temporarily stored. Note that the information on the banding width change instruction temporarily stored here is not output to the division processing section 110.

Then, the procedure advances to Step S300, in which the print data item having the print command added thereto to be currently transferred is transferred to the printer device 20. Note that the transfer of the print data item having the print command added thereto to the printer device 20 is performed after it is confirmed that the printer operating signal for indicating the state of the print processing performed on the printer device 20 indicates that the print processing is not under way.

On the other hand, in Step S230, if the print data item to be currently transferred to the printer device 20 is not the initial print data item, the procedure advances to Step S250, in which it is checked whether or not the printer operating signal input from the printer device 20 indicates that the print processing is under way (the printer device 20 is in a operating state). If the printer operating signal input from the printer device 20 indicates the print processing not (no longer) being under way (the printer device 20 is not in an operating state), it is judged that the transfer speed of the communication interface is fast. Then, the procedure advances to Step S260, in which information on the banding width change instruction indicating that the banding width of the print data item to be transferred next time to the printer device 20 is to be set wider is temporarily stored. Note that the information on the banding width change instruction temporarily stored here is not output to the division processing section 110.

Further, in Step S250, if the printer operating signal input from the printer device 20 indicates the print processing (still) being under way (the printer device 20 is in a operating state), it is judged that the transfer speed of the communication interface is slow. Then, the procedure advances to Step S270, in which the information on the banding width change instruction indicating that the banding width of the print data item to be transferred next time to the printer device 20 is to be set narrower is temporarily stored. Note that the information on the banding width change instruction temporarily stored here is not output to the division processing section 110.

Subsequently, in Step S280, the data transfer section 120 compares the information on the banding width change instruction temporarily stored when the print data item is transferred last time to the printer device 20 with the information on the banding width change instruction temporarily stored currently. Then, it is checked whether or not the information on the banding width change instruction temporarily stored last time and the information on the banding width change instruction temporarily stored currently are the same, that is, whether or not the processing for changing the banding width intended to be performed last time and the processing for changing the banding width intended to be performed currently are the same processing. Note that if there is no information on the banding width change instruction temporarily stored when the print data item is transferred last time to the printer device 20, the comparison of the information on the banding width change instructions is not performed in Step S280. Alternatively, the comparison can be performed by assuming that the information on the banding width change instruction temporarily stored when the print data item is transferred last time to the printer device 20 is information indicating that the banding width of the print data item has the setting kept from being changed (keeps the current setting).

In Step S280, if the processing for changing the banding width intended to be performed last time and the processing for changing the banding width intended to be performed currently are not the same processing, the procedure advances to Step S290, in which the banding width change instruction indicating that the banding width of the print data item to be transferred next time to the printer device 20 has the setting kept from being changed (keeps the current setting) is output to the division processing section 110. Note that in Step S290, because the setting of the banding width is not changed, the banding width change instruction may be configured not to be output. Further, the data transfer section 120 erases the information on the banding width change instruction temporarily stored last time when the print data item was transferred to the printer device 20.

On the other hand, in Step S280, if the processing for changing the banding width intended to be performed last time and the processing for changing the banding width intended to be performed currently are the same processing, it is judged that the transfer speed of the communication interface is fast or slow. Then, the banding width change instruction indicating the processing for changing the banding width intended to be performed last time and currently, that is, indicating that the banding width of the print data item to be transferred next time to the printer device 20 is set wider or narrower, is output to the division processing section 110. Further, the data transfer section 120 erases the information on the banding width change instruction temporarily stored when the print data item was/is transferred to the printer device 20 last time and currently.

Then, the procedure advances to Step S300, in which the print data item having the print command added thereto to be currently transferred is transferred to the printer device 20. Note that the transfer of the print data item having the print command added thereto to the printer device 20 is performed after it is confirmed that the printer operating signal for indicating the state of the print processing performed on the printer device 20 indicates that the print processing is not (or is no longer) under way.

Subsequently, in Step S310, the data transfer section 120 checks whether or not the print data item having the print command added thereto that has been currently transferred has completed the transfer of all the print data items generated from the print image based on the print data specified by the control means to the printer device 20. If the transfer of all the print data items to the printer device 20 has been completed, the processing is brought to completion. If the transfer of all the print data items to the printer device 20 has been completed, all the information items on the banding width change instructions temporarily stored when the print data items were transferred to the printer device 20 are erased, and the processing is brought to completion.

On the other hand, in Step S310, if the transfer of all the print data items to the printer device 20 has not been completed, the data transfer section 120 outputs the print data request signal to the division processing section 110, and requests the print data item to be transferred next time. Then, the procedure returns to Step S210, in which the division processing section 110 generates the print data having the banding width corresponding to the banding width change instruction output from the data transfer section 120 in Step S280 or Step S290. Then, the print data having the banding width corresponding to the generated banding width change instruction is output to the data transfer section 120.

Note that the processing performed by the division processing section 110 to change the banding width according to the banding width change instruction input from the data transfer section 120 is the same as the processing for changing the banding width of the first processing procedure illustrated in FIG. 2.

Thus, the generation of the print data based on the banding method and the transfer of the print data item having the print command added thereto to the printer device 20 are repeatedly performed by the division processing section 110 and the data transfer section 120, respectively.

As described above, in the second processing procedure followed by the printing system 1 according to this embodiment, it can be judged whether or not the banding width of the print data item to be transferred next time to the printer device 20 is to be changed according to the state of the print processing performed on the printer device 20 when the print data is transferred to the printer device 20 for the second and subsequent times. Further, in the second processing procedure, it is possible to change the banding width of the print data item to be transferred next time to the printer device 20 when the processing for changing the banding width of the print data item to be transferred to the printer device 20 is the same processing two times in a row, that is, when the same processing for setting the banding width wider or narrower occurs twice in a row. This can prevent the banding width change instruction from being output too often in such a manner that, for example, the setting for widening the banding width and the setting for narrowing the banding width alternately occur in the proximity of the optimal banding width of the print data item to be transferred to the printer device 20. Accordingly, it is possible to stably perform the changing of the setting of the banding width.

In addition, when the banding width is set wider, it is possible to alleviate the processing load of the print processing performed by the CPU 210 within the printer device 20 according to the print command added to the print data, which can improve the print speed of the printing system 1. On the other hand, when the banding width is set narrower, the amount of the print data to be transferred to the printer device 20 becomes smaller, and the operating ratio of the CPU 210 within the printer device 20 can be increased by reducing the transfer waiting time for the print data, which can improve the print speed of the printing system 1.

Note that in Step S280 of the second processing procedure, the case where the data transfer section 120 erases the information on the banding width change instruction temporarily stored when the print data was/is transferred to the printer device 20 last time and currently is described, but the information on the banding width change instruction to be erased in Step S280 can be set as only the information on the banding width change instruction for the last time. In this case, the comparison between the processing for changing the banding width intended to be performed last time and the processing for changing the banding width intended to be performed currently which is performed in Step S280 of the second processing procedure constantly results in the processing for changing the banding width intended to be performed last time. This is the same operation as the first processing procedure illustrated in FIG. 2.

Further, in Step S310 of the second processing procedure, the case where the data transfer section 120 erases all the information items on the banding width change instructions temporarily stored when the print data items were transferred to the printer device 20, but the information on the banding width change instruction can be kept from being erased. In this case, the information on the banding width change instruction temporarily stored can be used as history information on the changing of the banding width in order to judge the banding width having the initial value set by the division processing section 110 in Step S200 when the print instruction is subsequently input from the control means. For example, on the assumption that the print data item specified when the print instruction is input from the control means is a print data item the same as or similar to the print data item printed last time, the banding width having the initial value and the value to which the banding width is to be changed can also be determined from a tendency in the changing of the banding width which is exhibited in the early part of the history information on the changing of the banding width.

As described above, in the present invention, when the host device divides the data on the print image into a plurality of ranges and transfers the divided data to the printer device, the banding width of the print data item to be subsequently transferred to the printer device is changed according to the state of the print processing performed on the printer device. Note that the host device recognizes the state of the print processing performed on the printer device as the print speed of a printer system which is obtained by combining a data transfer speed of the communication interface connecting the host device and the printer device and a print processing speed of the printer device. Accordingly, the print data having the optimal banding width corresponding to the transfer speed of the communication interface connecting the host device and the printer device and the print processing speed of the printer device can be transferred to the printer device.

With this configuration, for example, in a case where the transfer speed of the communication interface connecting the host device and the printer device is slow, the banding width of the print data item to be transferred can be narrowed (the amount of data can be reduced), and it is possible to reduce a time for the transfer of the print data from the host device to the printer device. As a result, a time for processing means within the printer device to wait for the transfer of the print data becomes shorter, and the operating ratio of the processing means within the printer device can be increased by reducing the idle time of the print processing performed on the printer device, which can improve the print speed of the printing system.

Further, for example, in a case where the transfer speed of the communication interface connecting the host device and the printer device is fast, the banding width of the print data item to be transferred can be widened (the amount of data can be increased), and it is possible to reduce the number of print commands added to the print data. As a result, the processing load of the print processing performed by the processing means within the printer device according to the print command is alleviated, which can improve the print speed of the printing system.

Further, in the present invention, based on results of the processing for changing the banding width performed up to the last time, it can be judged whether or not to perform the changing of the banding width. This can prevent the banding width from being changed too often in the proximity of the optimal banding width of the print data item to be transferred to the printer device, which allows a suitable banding width to be set stably.

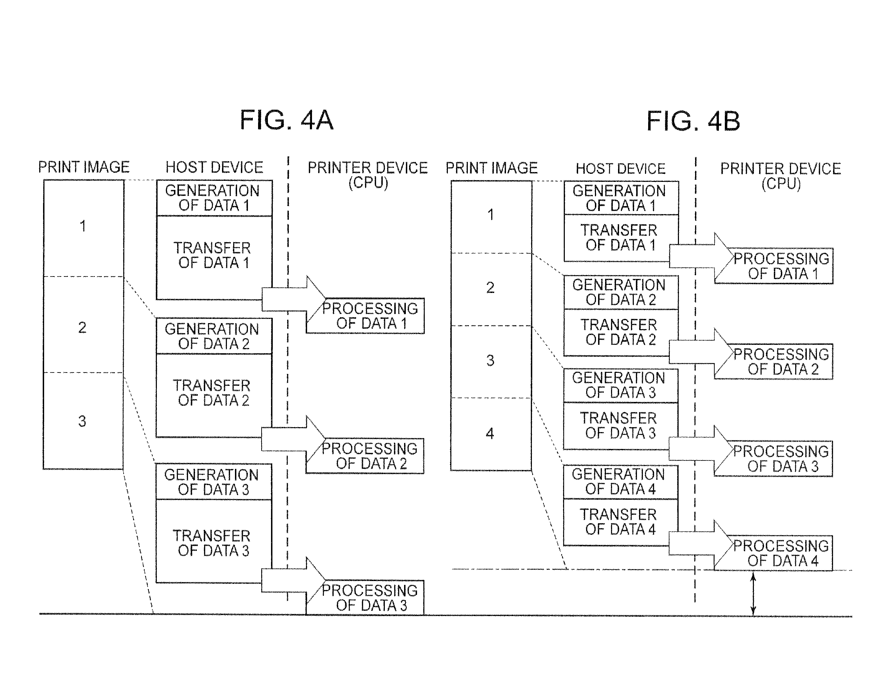

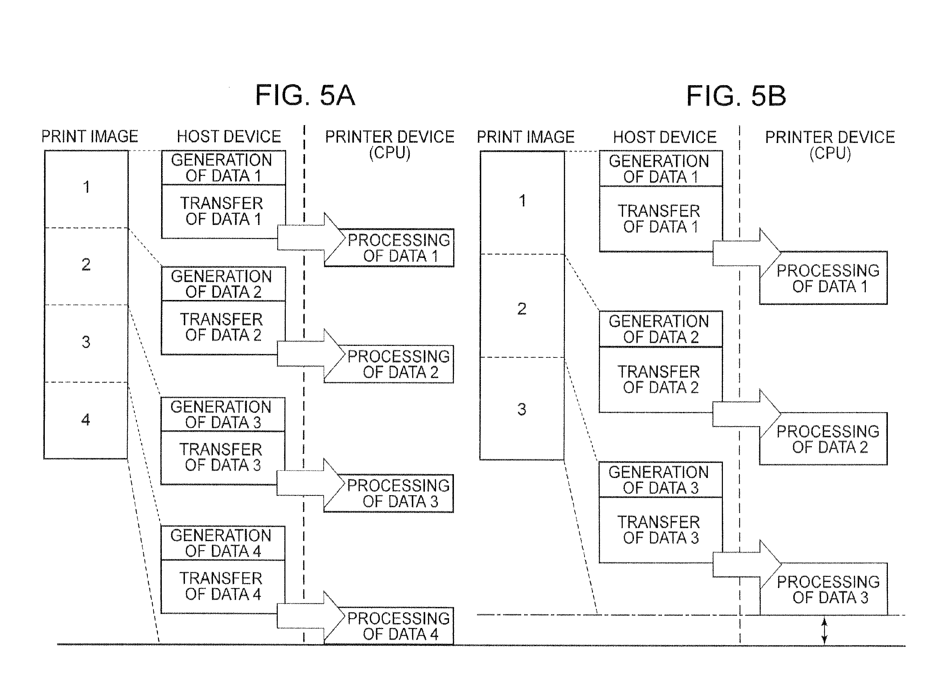

Here, a comparison is performed between a print time for a conventional printing system and a print time for the printing system to which the present invention is applied. FIGS. 4A and 4B and FIGS. 5A and 5B are diagrams illustrating examples of the comparison between the print time for the conventional printing system and the print time for the printing system according to the embodiment of the present invention. Note that FIGS. 4A and 4B illustrate the comparison of the print time in the case where the transfer speed of the communication interface connecting the host device and the printer device is slow, and FIGS. 5A and 5B illustrate the comparison of the print time in the case where the transfer speed of the communication interface connecting the host device and the printer device is fast. Further, FIG. 4A and FIG. 5A illustrate examples of the print time for the conventional printing system, and FIG. 4B and FIG. 5B illustrate examples of the print time for the printing system to which the present invention is applied.

Note that in order to facilitate the comparison, FIGS. 4A and 4B and FIGS. 5A and 5B each illustrate the print time taken if the banding width only in a longitudinal direction is changed in the case of printing the same print data (for example, document). Further, the banding width is changed to an optimal width each time the host device transfers the print data to the printer device in the printing system to which the present invention is applied, but in order to facilitate the comparison, it is assumed in FIG. 4B and FIG. 5B that the optimal banding width is achieved in the first place.

First described is the print time illustrated in FIGS. 4A and 4B which elapses in the case where the transfer speed of the communication interface connecting the host device and the printer device is slow. Here, it is assumed that the processing load imposed on the CPU allows sufficient room for the CPU within the printer device to perform a data processing. Accordingly, in FIGS. 4A and 4B, a time other than a time for data transfer, that is, a time for data generation performed on the host device and a time for the data processing performed by the CPU within the printer device are substantially the same.

In the conventional printing system illustrated in FIG. 4A, the host device divides the print image based on the print data into three print data items. On the other hand, in the printing system illustrated in FIG. 4B to which the present invention is applied, the host device divides the print image based on the print data into four print data items.

As is clear from FIGS. 4A and 4B, in the printing system illustrated in FIG. 4B to which the present invention is applied, the banding width of the print data item to be transferred is narrowed (the amount of data is reduced) to thereby reduce the time for the data transfer from the host device to the printer device compared to the conventional printing system illustrated in FIG. 4A. Accordingly, the number of times that the data processing is performed by the CPU within the printer device increases, but the total print time for the printing system is found to be reduced. Thus, in the case where the transfer speed of the communication interface connecting the host device and the printer device is slow, the operating ratio of the processing means within the printer device can be increased by reducing the time for the transfer of the print data from the host device to the printer device and resultantly reducing the transfer waiting time for the print data, and it is possible to reduce the print time for the printing system. As a result, it is possible to realize an improvement in the print speed of the printing system.

Next described is the print time illustrated in FIGS. 5A and 5B which elapses in the case where the transfer speed of the communication interface connecting the host device and the printer device is fast. Here, the transfer speed at which data is transferred from the host device to the printer device is sufficiently high, and a transfer time corresponding to the amount of transferred data is only required. Further, it is assumed that the processing load imposed on the CPU allows little room for the CPU within the printer device to perform the data processing, and that the time for the data processing increases as the amount of data increases. Accordingly, between FIGS. 5A and 5B, the time for the data generation performed on the host device is the same, but the time for the data transfer and the time for the data processing performed by the CPU within the printer device are different according to the amount of data.

In the conventional printing system illustrated in FIG. 5A, the host device divides the print image based on the print data into four print data items. On the other hand, in the printing system illustrated in FIG. 5B to which the present invention is applied, the host device divides the print image based on the print data into three print data items.

As is clear from FIGS. 5A and 5B, in the printing system illustrated in FIG. 5B to which the present invention is applied, the banding width of the print data item to be transferred is widened (the amount of data is increased) to thereby increase the time for the data transfer from the host device to the printer device compared to the conventional printing system illustrated in FIG. 5A. In addition, the time for the data processing performed by the CPU within the printer device increases as the banding width of the print data item to be transferred (data amount) increases. However, the number of times that the data processing is performed by the CPU within the printer device is reduced, and hence an increase amount of the time for the data processing performed by the CPU within the printer device is smaller than an increase amount of the banding width of the print data item to be transferred (data amount). Accordingly, there may be a processing increasing in the processing time when the comparison is performed in terms of each processing, but the total print time for the printing system is found to be reduced. Thus, in the case where the transfer speed of the communication interface connecting the host device and the printer device is fast, the print time for the printing system can be reduced by alleviating the processing load of the data processing for the print data. As a result, it is possible to realize an improvement in the print speed of the printing system.

Accordingly, in the present invention, the banding width (data amount of the print data) is set to the optimal width (data amount) so as to strike a balance between the data transfer speed of the print data and the print processing speed of the printer device instead of improving the print speed of the printing system by increasing only one of the data transfer speed of the print data and the print processing speed of the printer device. As a result, the print time for the printing system can be reduced, and it is possible to realize an improvement in the print speed of the printing system with efficiency.

Note that in the description of this embodiment, the print data storage section 130 is provided within the host device 10, but the print data storage section 130 may be provided to an outside portion of the host device 10. Alternatively, instead of providing the print data storage section 130 within the printing system 1, the print data to be printed may be input from the control means (not shown) along with the print instruction.

Further, in the description of this embodiment, it is judged based on the data ready signal output from the host device 10 and the printer operating signal output from the printer device 20 whether or not the print data item having the print command added thereto can be transferred to the printer device 20. However, the method of judging whether or not the print data item having the print command added thereto can be transferred to the printer device 20, that is, the method of judging whether or not the print processing is under way on the printer device 20 is not limited to the embodiment for carrying out the present invention, and can be changed to another method that does not depart from the scope of the present invention.

Further, the description of this embodiment is directed to the case where the banding width having the initial value is set for the division processing section 110 in Step S100 illustrated in FIG. 2 and Step S200 illustrated in FIG. 3 after the print data is specified from the control means is a predetermined width. However, a width other than the predetermined banding width having the initial value can be used as the initial banding width set after the print data is specified from the control means. For example, in Step S190 illustrated in FIG. 2 and Step S310 illustrated in FIG. 3, the banding width corresponding to the banding width change instruction set when it is judged that the transfer of all the print data items to the printer device 20 has been completed may be stored as the initial banding width. In this configuration in which, for example, the host device 10 and the printer device 20 are connected to each other by the same communication interface, the transfer speed of the communication interface does not change in a case where another print data item is printed after one print data has been printed and other such cases, and hence the banding width of the print data item can be set to the optimal banding width in an early stage. Accordingly, it is possible to further improve the print speed of the printing system 1.

Note that the description of this embodiment is directed to the case where the data on the print image is divided into a plurality of ranges by the banding method and the banding width is set to the optimal width, but the present invention can also be applied to a case where the print data is divided by another method, for example, a division method of dividing the data amount of the print data into a plurality of amounts. In this case, the present invention can be applied by replacing the banding width according to this embodiment by the data amount.

Note that the above-mentioned various processings related to the host device 10 may also be performed by recording, on a computer-readable recording medium, a program for implementing a processing performed by each component within the host device 10 illustrated in FIG. 1 or each processing step of changing the banding width performed by each component within the host device 10 illustrated in FIG. 2 or FIG. 3, loading the program stored in the recording medium, and executing the program. Note that the "computer system" used here may include an OS and hardware such as peripheral devices. Further, the "computer system" includes a website providing environment (or displaying environment) in a case where a WWW system is used. Further, the "computer-readable recording medium" represents a writable nonvolatile memory such as a flexible disk, a magneto-optical disk, a ROM, or a flash memory, a portable medium such as a CD-ROM, or a storage device such as a hard disk drive built into the computer system.

In addition, the "computer-readable recording medium" includes one that retains a program for a predetermined time period such as a volatile memory (for example, dynamic random access memory (DRAM)) within the computer system serving as a server or a client when the program is transmitted via a network such as the Internet or a communication line such as a telephone line. In addition, the above-mentioned program may be transmitted from the computer system storing the program in the storage device or the like to another computer system via a transmission medium or a carrier wave within the transmission medium. Here, the "transmission medium" for transmitting the program represents a medium having a function of transmitting information, examples of which include a network (communication network) such as the Internet and a communication line (line of communications) such as a telephone line. Further, the above-mentioned program may serve to implement only a part of the above-mentioned function. Further, the above-mentioned program may be a so-called difference file (difference program) that can implement the above-mentioned function by being combined with the program already recorded in the computer system.

The embodiment of the present invention has been described above with reference to the accompanying drawings, but specific configurations thereof are not limited to this embodiment, and various changes can be made that do not depart from the scope of the present invention.

## Claims

1. A data dividing method, which is performed by a host device (10) for dividing a print range of data to be printed into a plurality of division data items and transferring the plurality of division data items sequentially to a printer device (20) in a printer system (1), the printer device and the host device being connected to each other by communication means in the printer system,
the data dividing method comprising:
a printer state detecting step (S150; S250) of detecting a state of the printer device;
a division data amount setting step (S160, S170; S260-S290) of setting, when a first division data item is to be transferred to the printer device, a size of the print range included in a second division data item to be subsequently transferred to the printer device based on the state of the printer device detected in the printer state detecting step; and
a data dividing step (S110; S210) of dividing the print range of the data to be printed into the second division data items based on the size of the print range set in the division data amount setting step.

2. A data dividing method according to claim 1, wherein the printer state detecting step comprises detecting the state of the printer device based on a operating signal for indicating whether or not the printer device is operating.

3. A data dividing method according to claim 2, wherein the division data amount setting step comprises:
setting the size of the print range included in the second division data item to a print range smaller than the size of the print range included in the first division data item in a case where the state of the printer device detected in the printer state detecting step is a state in which the printer device is operating; and
setting the size of the print range included in the second division data item to a print range larger than the size of the print range included in the first division data item in a case where the state of the printer device detected in the printer state detecting step is a state in which the printer device is not operating.

4. A data dividing method according to claim 3, wherein:
the printer state detecting step further comprises detecting, when the first division data item is to be transferred to the printer device, a time that has elapsed since the first division data item was intended to be transferred to the printer device until the operating signal indicates that the printer device is not operating;
the division data amount setting step further comprises a division data amount changing step of changing a change amount for changing the size of the print range included in the second division data item based on the time that has elapsed until the operating signal indicates that the printer device is not operating which is detected in the printer state detecting step; and
the division data amount changing step comprises:
setting the change amount of the size of the print range included in the second division data item to a larger change amount in a case where the time that has elapsed until the operating signal indicates that the printer device is not operating is longer than a predetermined first time; and
setting the change amount of the size of the print range included in the second division data item to a smaller change amount in a case where the time that has elapsed until the operating signal indicates that the printer device is not operating is shorter than a predetermined second time.

5. A data dividing method according to claim 3, wherein the division data amount setting step further comprises:
storing, each time the first division data item and the second division data item are transferred to the printer device:
range decreasing information indicating that the size of the print range included in each of the first division data item and the second division data item is set to a print range smaller than the size of the print range included in a respective preceding division data item; and
range increasing information indicating that the size of the print range included in each of the first division data item and the second division data item is set to a print range larger than the size of the print range included in a respective preceding division data item; and
setting, in a case where one of the range increasing information and the range decreasing information has been stored a predetermined number of times when the second division data item is to be transferred to the printer device, the size of the print range included in a third division data item to be subsequently transferred to the printer device based on the stored one of the range increasing information and the range decreasing information.

6. A data dividing method according to claim 3, wherein the division data amount setting step further comprises:
storing, each time the first division data item and the second division data item are transferred to the printer device:
range decreasing information indicating that the size of the print range included in the second division data item is set to a print range smaller than the size of the print range included in the first division data item; and
range increasing information indicating that the size of the print range included in the second division data item is set to a print range larger than the size of the print range included in the first division data item; and
setting, in a case where one of the range increasing information and the range decreasing information has been successively stored a predetermined number of times when the second division data item is to be transferred to the printer device, the size of the print range included in a third division data item to be subsequently transferred to the printer device based on the stored one of the range increasing information and the range decreasing information.

7. A data dividing method according to claim 5 or claim 6, wherein the division data amount setting step further comprises setting, in a case where the one of the range increasing information and the range decreasing information has been stored two times in a row, the size of the print range included in the third division data item based on the one of the range increasing information and the range decreasing information that has been stored two times in a row.

8. A data dividing method according to any one of claims 1 to 7, further comprises setting in advance a plurality of first setting values for indicating the size of the print range corresponding to the communication means connecting the printer device and the host device to each other and one of a second setting value and a rate for changing the size of the print range,
wherein the division data amount setting step comprises:
setting one of the plurality of first setting values corresponding to the communication means connecting the printer device and the host device to each other among the plurality of first setting values as the size of the print range included in the first division data item; and
setting the size of the print range included in one of the second division data item and the third division data item based on one of the second setting value and the rate.

9. A data dividing method according to any one of claims 1 to 8, wherein:
the data to be printed comprises image data; and
the print range comprises a banding width of the image data.

10. A data dividing device, which is provided to a host device (10) for dividing a print range of data to be printed into a plurality of division data items and transferring the plurality of division data items sequentially to a printer device (20) in a printer system (1), the printer device and the host device being connected to each other by communication means in the printer system,
the data dividing device comprising:
printer state detecting means (120) for detecting a state of the printer device;
division data amount setting means (120) for setting, when a first division data item is to be transferred to the printer device, a size of the print range included in a second division data item to be subsequently transferred to the printer device based on the state of the printer device detected by the printer state detecting means; and data dividing means (110) for dividing the print range of the data to be printed into the second division data items based on the size of the print range set by the division data amount setting means.
